(19) **Europäisches Patentamt**

**European Patent Office**

**Office européen des brevets**

(11) Publication number: **0 131 377**
**B1**

(12) **EUROPEAN PATENT SPECIFICATION**

(45) Date of publication of patent specification: **02.09.87**

(21) Application number: **84303832.4**

(22) Date of filing: **06.06.84**

(51) Int. Cl.⁴: **B 65 G 15/46,** B 65 G 17/12,
B 65 G 17/42, E 02 F 3/08,
E 02 F 3/12, E 02 F 3/14

(54) **A belt conveyor.**

(30) Priority: **07.06.83 US 501836**

(43) Date of publication of application:
**16.01.85 Bulletin 85/03**

(45) Publication of the grant of the patent:
**02.09.87 Bulletin 87/36**

(84) Designated Contracting States:
**DE FR GB IT**

(56) References cited:
**BE-A- 894 277**
**DE-A-2 732 932**
**DE-C- 968 838**
**FR-A- 724 675**
**GB-A- 510 334**
**US-A-1 944 932**
**US-A-2 227 776**
**US-A-2 747 726**
**US-A-2 751 065**
**US-A-3 388 786**
**US-A-3 861 518**

(73) Proprietor: **DRAVO CORPORATION**
**One Oliver Plaza**
**Pittsburgh Pennsylvania 15222 (US)**

(72) Inventor: **Briggs, Aubrey Charles**
**3 Scheffield Drive (Rosslyn Farms)**
**Carnegie Pennsylvania 15106 (US)**

(74) Representative: **Frankland, Nigel Howard et al**
**FORRESTER & BOEHMERT Widenmayerstrasse**
**4/I**
**D-8000 München 22 (DE)**

Courier Press, Leamington Spa, England.

## Description

This invention relates to a belt conveyor and especially to a belt conveyor having digging means on the outer surface thereof which impose radial, longitudinal, and lateral loads on the belt as it passes around end pulleys of the conveyor and also, in some applications, on the straight length between pulleys.

Conveyors in the form of bucket ladders are commonly used in lifting bulk materials and are often used as diggers which are advanced into or across a pile or storage chamber to reclaim such material. Typically, such conveyors comprise a series of buckets which are secured at spaced intervals along endless chains which are constrained to a loop by sprocket wheels. The teeth of the sprocket wheels resist any side loads imposed on the buckets as the conveyor advances into the material at an angle to its longitudinal axis. Tension in the chains or the weight thereof, depending upon the arrangement, resists the tendency of the digging forces to lift the chains off the sprockets. Such an apparatus is disclosed in US Patent No. 3640376.

Chain type bucket ladders are very heavy and cumbersome, however, and require very substantial supporting structures. This is a particular problem in reclaimers used to recover material from very large piles and in continuous ship unloaders where the bucket ladder is mounted on the end of a very long boom. In addition, chain type bucket ladders operate at relatively slow speeds.

A belt type conveyor fitted with buckets is much lighter and less cumbersome than a chain type bucket ladder, however, such belts tend to creep axially along their end pulleys even when no intentional side loads are imposed on the conveyor. Where such a conveyor is fed into a pile with a component of motion lateral to the plane of the belt loop, very significant side loads are generated which must be resisted. In addition, at the digging end, the radially outward digging force tends to pull the belt away from the end pulley causing rapid deterioration of the belt. US Patents Nos. 1944932 and 3861518 show belt-type conveyors fitted with buckets.

Wire ropes have been imbedded in conveyor belts to increase their tensile strength which aids in resisting the radial digging forces but this in itself does nothing to resist the lateral digging forces. Separate wire ropes have also been used inside the loops of endless belts to sustain the tensile load. In a great many of these conveyors, as exemplified, for instance, by the conveyor described in U.S. Patent No. 2,751,065, the belt is frictionally supported on wire ropes on the level or on relatively shallow angled work runs, but is separated from the wire ropes at the end of the work run and goes around its own end pulley while the wire ropes are reeved through a separate arrangement of pulleys which applies the driving tension to the pulleys. U.S. Patent No. 2,747,726 discloses a belt conveyor in which wire ropes which separate from the belt at the end pulleys are mechanically gripped on the work and return runs by clamps attached to the belt. The conveyor described in U.S. Patent No. 3,388,786 comprises a series of rigid plates which slide with respect to one another and resilient linkages between the plates which accommodate for changes in plate pitch at the end pulleys. The plates have curved bottoms conforming to the curvature of the end pulleys to facilitate cleaning of the plates as they travel around the end pulleys. The wire ropes on which the plates are supported on the work and return run are diverted around separate end pulleys.

In one prior arrangement, disclosed in BE 894,277 a wire rope is coupled to the vertical portion of a belt type conveyor with integral pockets for holding bulk material by two rows of resilient blocks secured to the inside of the belt. The wire rope is forced into semicircular grooves in confronting faces of the blocks by a pulley at the beginning of the vertical run and is gripped tightly by pairs of pulleys spaced along the vertical run which urge the blocks toward each other with the wire rope in between. At the top of the vertical run, the blocks are received in a square cut peripheral groove in the deflection pulley and the wire rope is pulled out from between the resilient blocks as the belt, with the blocks attached, is deflected 90° from the vertical to the horizontal while the wire rope continues 180° around the pulley and proceeds vertically downward.

German Patent No. DE 968,838 discloses a conveyor comprising a belt with an integrally formed rail member partially enclosing a wire cable. The rail member is supported by a plurality of pulleys which act to cause the rail member to grip the wire cable along its length.

In these prior art arrangements, the wire rope is used to carry at least some of the tension forces imposed on the belt on the work run. The wire rope is either separated physically from the belt at the end pulleys or is otherwise decoupled from the belt in this area.

According to the present invention, there is provided a belt conveyor comprising: an endless belt; a frame including a pair of spaced pulleys around which the endless belt is trained so as to be movable over the pulleys; a resilient rail member extending along the length of and secured to the inner surface of the endless belt; and a wire rope loosely received in and extending through a longitudinal bore of the resilient rail member, the rail member having a transverse cross-section which tapers in a direction away from the inner surface of the belt and each pulley having a peripheral groove for receiving the resilient member, each peripheral groove having a tapered cross-section, corresponding to, but slightly smaller in width than, that of the resilient rail member, characterised in that digging means are provided on the outer surface of the endless belt at spaced locations along its length, in that the wire rope is fully enclosed within the longitudinal bore of the resilient rail member throughout its length, and in that the wire rope is only gripped firmly by the resilient rail member when the rail member is wedged down into the pulley groove upon the rail member passing over a pulley.

DE—C—968838 discloses a belt conveyor having all of the features of the first part of claim 1.

Thus, the present invention enables the provision of a rugged, light weight, high speed belt conveyor fitted with buckets or other digging means which can dig bulk material under conditions which impose high radial and/or lateral forces on the conveyor belt.

Preferably, a plurality of resilient rail members extend along the length of and are secured to the inner surface of the endless belt, a respective wire rope being loosely received in and extending through a corresponding longitudinal bore of each resilient rail member, each resilient rail member having a transverse cross-section which tapers in a direction away from the inner surface of the belt and each end pulley having a plurality of peripheral grooves, each having a cross-section corresponding to, but slightly narrower than, that of the corresponding resilient member such that as a resilient rail member passes over a pulley, the resilient rail member is wedged down into the respective pulley groove to grip the wire rope extending through the resilient member.

The or each resilient member may be made of two longitudinal portions having elongate grooves in the confronting faces thereof, the elongate grooves defining the longitudinal bore of the resilient rail member. Usually, each of the longitudinal portions of the or each resilient rail member comprises a series of discrete blocks, adjacent ones of the discrete blocks in each series thereof having meshing projections and recesses.

Generally, the digging means comprises discrete digging members spaced along the belt and the discrete blocks and discrete digging members are secured to the inner and outer surfaces respectively of the endless belt by elongate fasteners passing through the discrete blocks, the belt and said discrete digging members. The digging means may be, for example, cleats or buckets. When the discrete digging members are buckets, the buckets may be secured to the outer surface of the endless belt at the leading and trailing ends thereof at longitudinally spaced points along the belt and means may be provided for accommodating for the change in the straight line distance between the spaced points as the endless belt and buckets pass around the pulleys. Usually, the accommodating means includes first mounting means at one of the longitudinally spaced points which allows the one end of the bucket mounted thereby to reciprocate relative to the point in the plane of the endless belt and conveniently the first mounting means connects the one end of the bucket to the endless belt and includes a linkage pivotally connected to the bucket and to a fixed pivot on the endless belt at one of the spaced points for rotation in the plane of the endless belt and the other end of the bucket is pivotally connected to the belt at the other spaced point by a fixed pivot of second mounting means.

Desirably, the bottom wall of each bucket is formed by the endless belt. This eliminates wear on the belt caused by material lodging between a rigid bucket bottom wall and the belt, and also, due to the flexing of the belt as it bends around the end pulleys, prevents material from caking in the buckets which would reduce the capacity of the conveyor and increase the power required. The side walls of the buckets extending along the endless belt may have bottom edges facing the belt which are concavely curved to accommodate the curvature of the peripheral surface of the pulleys.

In a preferred embodiment, two endless wire ropes are provided, each wire rope having two series of discrete blocks loosely securing the same to the inner surface of the endless belt throughout its length so that the second wire rope is in transversely spaced relation across the belt from the first wire rope, each discrete block having sloping side edges and the two series of discrete blocks loosely securing a respective wire rope received in a respective groove on each end pulley, respective first and second bucket mounting means being secured to the endless belt by elongate fasteners passing through the mounting means, the endless belt and the discrete blocks forming each of the two resilient rail members.

Generally, the bucket mounting means includes means for pivotally connecting the buckets to the elongate fasteners at one end of the buckets and pivotally mounted linkages connecting the bucket to the elongate fasteners at the other end thereof such that, the other end of the bucket can move in the direction of the longitudinal axis of the belt relative to the elongate fasteners to which it is connected by the pivotally mounted linkage to accommodate for the change in the straight line distance between the elongate fasteners connected to the two ends of the buckets as they pass around the end pulleys.

Preferably, the frame includes a respective elongate longitudinal member extending along each side of the conveyor outside the endless belt and overlapping the end pulleys which are journalled for rotation at opposite ends of the elongate longitudinal members, and seal means are provided for sealing spaces between the elongate longitudinal members, the edges of the belt and the end pulleys, which seal means include, for one or each end pulley, means overlapping the end faces of the pulley between the elongate longitudinal members and the edges of the portion of the belt which is adjacent the pulley and a scraper or a respective scraper extending into the or each respective groove in the pulley at the part where the or the corresponding resilient rail member leaves the or the respective groove for scraping deposits from the or the respective groove and diverting them laterally out of the plane of the endless belt. Generally, the or each scraper comprises a first planar member which slopes away from the inner surface of the belt as the first planar member extends toward the respective edge of the belt, the first planar member having a leading edge contoured to scrape the or a pulley groove and the surface of the pulley between that respective groove and the end face of the pulley adjacent the respective edge of the belt and a second planar member abutting a trailing edge of the first planar member, the second planar member extending transversely of the first planar member toward the inner surface of the belt and sloping away from the inner surface of the belt in the direction in which the belt is movable and the second planar member having a notch in the edge thereof which- is toward the inner surface of the belt, which notch is contoured to scrape the surface of the or a resilient rail member. Normally, the space filling means of the seal means comprises one or more seal portions, the or each seal portion being recessed from the side edges of the endless belt and extending around the or a respective resilient rail member and the inner surface and an or a respective edge of the endless belt to form a labyrinth seal to prevent material and foreign matter getting under the belt and the resilient rail member or members. Conveniently, the seal means includes a curved plate member abutting an end of the or each seal portion where the latter approaches the said one end pulley or the respective end pulley, the or each curved plate member extending laterally outwardly to the end face of the said one or the respective end pulley and circumferentially around the pulley in close proximity thereto to cover the or a groove therein in front of the position at which the endless belt engages the pulley and the overlapping means extend from the or each curved plate member around the end faces of the said one or the respective pulley.

For a better understanding of the present invention and to show how the same may be put into effect, reference will now be made, by way of example, to the accompanying drawings, in which:

FIGURE 1 is a side elevational view of a conveyor constructed in accordance with the invention;

FIGURE 2 is a vertical section taken through the conveyor of Figure 1 along the line 2—2 of Figure 1;

FIGURE 3 is a top plan view of a portion of the conveyor of Figure 1 with parts broken away;

FIGURE 4 is an isometric view illustrating the manner in which the wire rope is coupled to the endless belt of a conveyor in accordance with the invention;

FIGURE 5 is an enlarged view of a portion of the conveyor of Figure 1 with parts removed for clarity;

FIGURE 6 is an isometric view of a section of a seal for preventing material from getting under the belt of a conveyor in accordance with the invention; and

FIGURE 7 is an isometric view of a scraper seal of a conveyor in accordance with the invention.

Referring now to the drawings, there is shown a conveyor embodying the invention in the form of a digger for recovering bulk material. The conveyor includes a pair of end pulleys 1 and 3 supported in spaced relation by a frame 5. An endless conveyor belt 7 is trained around the pulleys 1 and 3 and is driven by motive means (not shown) connected to one of the pulleys. A pair of endless wire ropes 9 extend around the inside of the loop formed by the endless belt 7 and are connected to the belt adjacent the longitudinal edges thereof by resilient rail members 11.

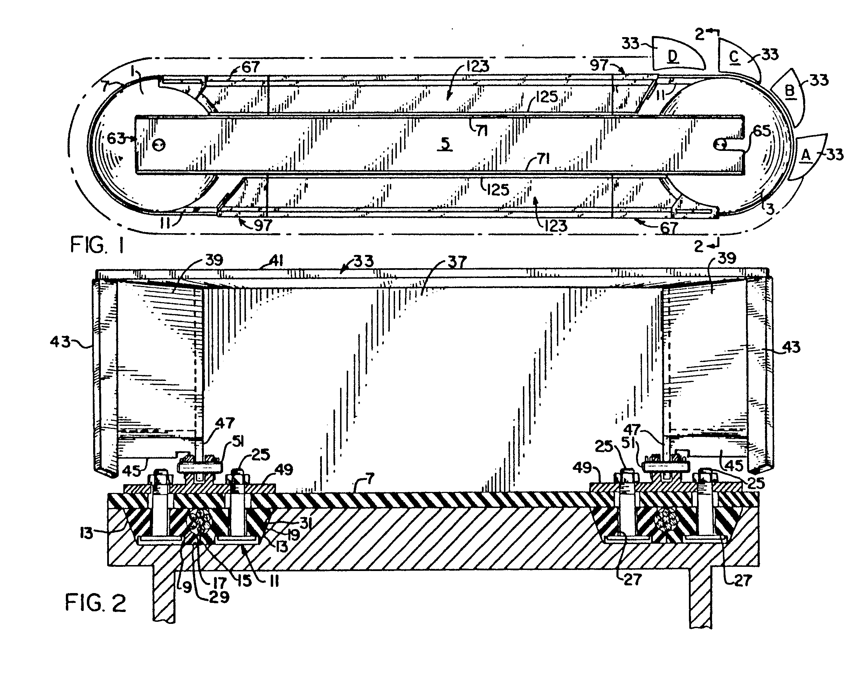

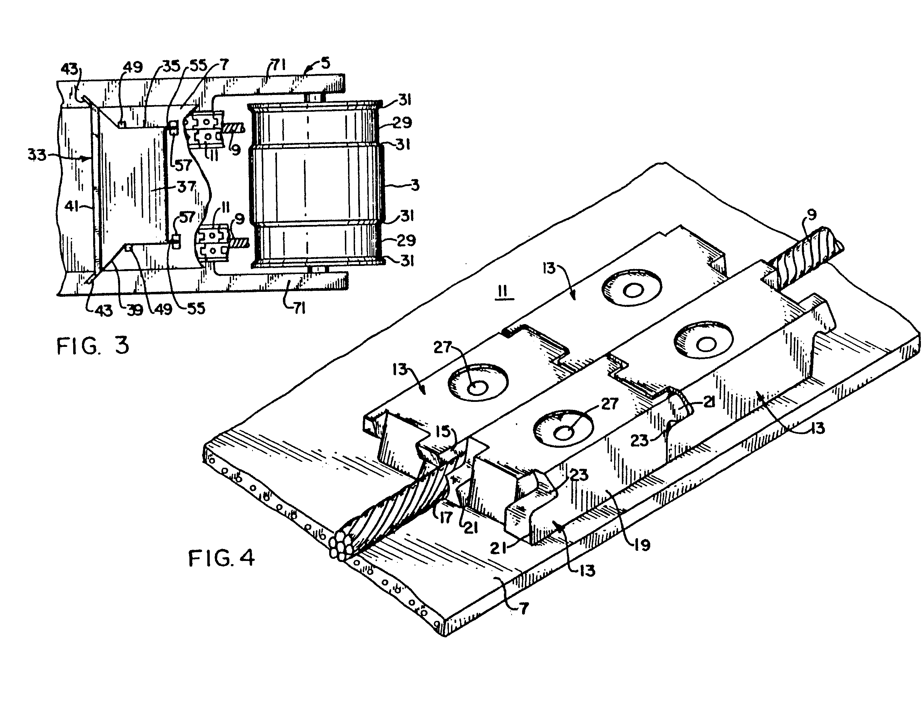

As best seen from Figures 2 and 4, the resilient rail members 11 are each made up of two rows of discrete blocks 13 of resilient material with each row of blocks forming a longitudinal half of the rail member. The blocks 13 are all identical and each have a vertical side edge 15 with a longitudinal, semi-circular groove 17, and a slanting, non-vertical side edge 19. The blocks 13 in the two rows which make up each resilient rail member 11 are oriented opposite one another so that the vertical side edges 15 confront one another and the semi-circular grooves 17 form a circular bore in which the associated wire rope 9 is loosely received. The outer edges 19 of each composite rail member slant inwardly toward one another in a direction away from the inner surface of the belt 7 to give the rail member a trapezoidal cross-section. Opposite ends of each resilient block 13 are provided with complementary projections 21 and recesses 23 which mesh with the corresponding projections and recesses on the adjacent blocks in the row to provide a flexible but effectively continuous rail member enclosing each wire rope. Each of the discrete blocks 13 is secured to the inner surface of the endless belt 7 by a bolt 25 seated in a countersunk transverse bore 27 formed in the block. While the wire ropes are thus loosely coupled to the endless belt by the discrete blocks 13, they are sufficiently retained to resist escape from between the two rows of engaging blocks under the action of a moderate force vertical to the face of the belt 7 such as would be imposed by a bucket cantilevered from a vertically oriented belt.

The end pulleys 1 and 3 of the digger are provided with peripheral grooves 29 in which the resilient rail members 11 are received as the endless belt 7, wire ropes 9 and rail members pass around the pulleys. The grooves 29 are of the same trapezoidal cross-section as the rail members 11, having sloping side walls 31, but are of slightly narrower cross-section. Thus, while the wire ropes are only loosely coupled to the belt 7 on the work and return runs between the end pulleys, tension in the belt pulls the resilient rail members 11 down into the grooves 29 in the end pulleys. The wedging action thus generated by the side walls 19 of the discrete blocks 13 of the resilient rail members bearing against the sloping walls 31 of the grooves 29 compresses the discrete blocks in the two rows toward each other and into firm gripping engagement with the associated wire rope. Any lateral forces on the belt tend to cause it to creep axially along either of the pulleys 1 or 3 and cause the resilient blocks to lift as the sloping side edges 19 of the blocks slide along the sloping side wall 31 of the groove 29. This produces tension in the wire rope which resists lateral movement.

As will be described in more detail below, the belt 7 is equipped with buckets 33 for lifting bulk material. Where the buckets dig into the material as they pass around one end pulley, very significant radial forces can be developed which tend to pull a belt away from the peripheral face of the pulley which may cause premature belt failure because of the sharp local bend in the belt and because the ingress of material between the belt and pulley may distress the belt. Moreover, such radial forces reduce the friction force between the belt and the pulley leaving the belt more prone to creep. However, by coupling the belt on which the buckets are mounted to the wire ropes 9, tension is developed in these ropes which resists the radial digging forces. As mentioned previously, the tension in the endless belt 7, the resiliency of the blocks 13, the relative width of the resilient rail members 11 and grooves 29 and their taper, and the relative lengths and elasticities of the belt and ropes, are such that a firm grip is maintained by the resilient blocks on the wire ropes 9 despite the tendency of the radial digging forces to pull the resilient rail members out of the grooves 29.

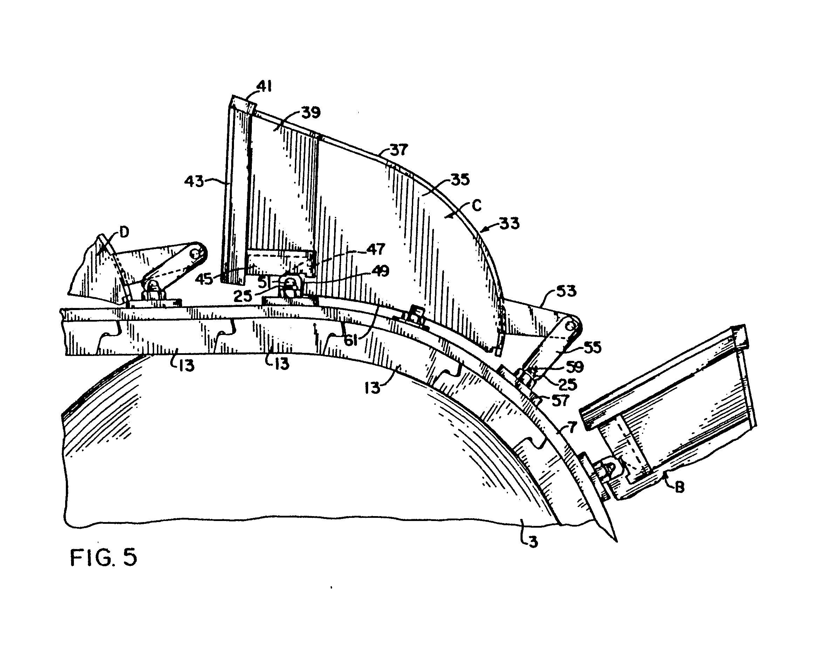

The buckets 33 are mounted on the belt 7 in a continuous series (only 4 are shown in Figure 1). As shown most clearly in Figures 3 and 5, each bucket 33 includes side walls 35, a curved back wall 37 which flares outwardly at the mouth of the bucket, and side panels 39 which extend outwardly from the side walls under the flared portion of the back wall. Wear plates 41 and 43 are welded onto the top and side edges respectively of the mouth of the bucket to resist abrasion from digging into bulk material. Filler plates 45 close the gap below the side panels 39.

The buckets are secured to the conveyor belt 7 at the leading ends thereof by projections 47 on the side walls 35 of the buckets. The projections 47 are pivotally connected to clevises 49 by pins 51. Each clevis 49 is bolted to the belt 7 by the bolts 25 which also secure the confronting discrete resilient blocks 13 to the belt 7.

The trailing end of each bucket is secured to the belt on each side thereof by a flexible connection which permits the trailing end to reciprocate in the direction of belt movement relative to the fixed connection to the belt. Thus, as shown in Figures 3 and 5, the rear of each of the side walls 35 carries a boss 53 which is pivotally connected to one end of a link 55, the other end of the link 55 being pivotally connected to a clevis 57 by pin 59. Each clevis 57 is bolted to the belt 7 in the same manner as the clevises 49 by bolts 25 which also pass through discrete blocks 13 in the two rows of blocks making up the resilient rail member on that side of the belt.

The purpose of the mounting which includes the link 55 is to accommodate changes in the straight line distance between the clevis pins 51 and 59 as the belt passes from the straight runs to the curved path around the end pulleys 1 and 3. As the belt 7 bends around the end pulleys, its length at the mean diameter of its curvature remains constant, but the straight line distance between any two points on the mean diameter becomes shorter because the chord is shorter than the curved path assumed by the belt. For objects secured to the surface of the belt, such as the clevises 49 and 57, the change in the straight line distance is dependent upon the radial distance of the pertinent point from the mean diameter of the belt. For two objects close to the belt surface, the straight line distance between them decreases as the belt curves around the pulleys. However, for objects farther removed from the belt surface, such as the clevis pins 51 and 59, this distance increases during passage around the pulleys. The effects of this are illustrated in Figures 1 and 5. As the buckets 35 such as A, B and C, pass in a counterclockwise direction around the end pulley 3, and the section of the belt 7 between each pair of clevises 49 and 57 assumes the curvature of the pulley causing the straight line distance between the associated clevis pins 51 and 59 to increase, the links 55 pivot counterclockwise on the clevis pins 59 to accommodate for the rigid dimension of the side walls 35 of these buckets. As a bucket reaches the straight run between end pulleys, the links 55 rotate clockwise to the position shown for the bucket D in Figure 1.

It should be noted that the buckets 33 have only side walls 35 and a back wall 37. The bottom wall is provided by the endless belt 7. This eliminates the problems associated with material becoming lodged between an integral bottom wall of a bucket and the endless belt which would subject the belt to undue wear, especially where, as in the preferred embodiment, the buckets are movable relative to the belt surface. There is another advantage to using the belt as the bottom wall of the buckets. Since the belt bends as it passes around the end pulleys, and the buckets move longitudinally, and to some extent radially, with respect to the belt surface, the tendency of sticky material to become lodged in the buckets is reduced. As seen in Figures 1 and 5, the bottom edges 61 of the side walls 35 of each bucket are concavely curved and have the same radius of curvature as the end pulleys so that the edges 61 provide a relatively close fit as the bucket digs into the bulk material. Even though this creates a gap between the side walls of a bucket and the belt on the straight sections, it has been found that very little material is lost through this gap.

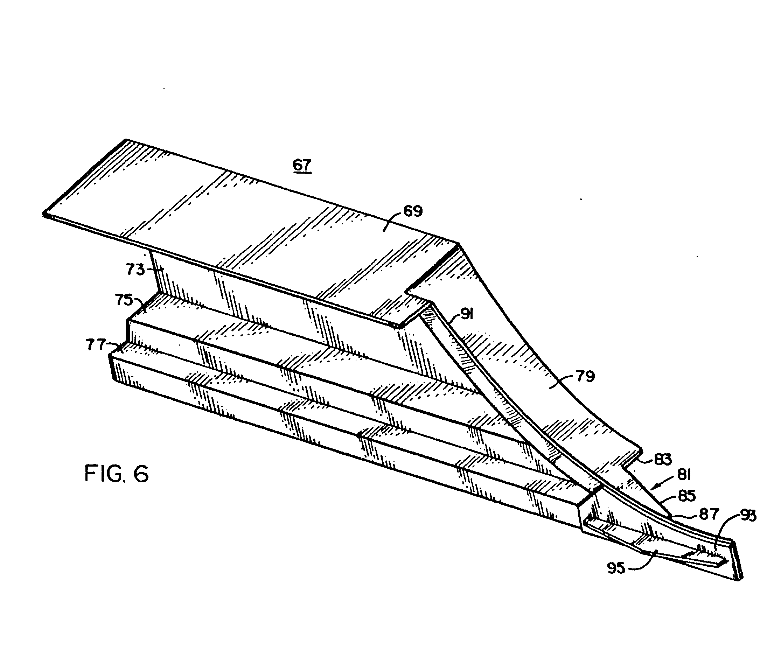

In order to prevent bulk material and other foreign objects from getting between the endless belt 7 or its resilient rail members 11 and the pulleys 1 and 3, seals are mounted on the frame 5. The frame 5 includes elongate members in the form of I-beams 63 (Figure 1) which extend parallel to the endless belt, the end pulleys 1 and 3 being journalled for rotation between the two I-beams in respective ends of the webs 65 of the beams 63. Where the endless belt 7 approaches an end pulley, a first seal unit 67 is disposed adjacent each I-beam 63. Such a seal unit is shown in the isometric drawing of Figure 6 and includes a flange portion 69 which abuts a flange of the respective I-beam 63. A planar member 73 which is recessed from the longitudinal edge of the endless belt, extends at right angles from the flange portion 69 toward the resilient rail member 11 on the associated side of the belt and terminates in a first offset portion 75 which extends laterally and then diagonally outwardly parallel to the bottom and side faces of the resilient rail member 11. The first offset portion 75 is followed by a second offset portion 77 which extends laterally outwardly parallel to the inner surface of the belt 7 outboard of the associated resilient rail member and then parallel to the longitudinal edge of the belt. These offset portions form, with the confronting surfaces of the associated resilient rail member and the endless belt with which they are in close proximity, a labyrinth seal which prevents bulk material from getting under the belt and rail members.

The planar member 73 and the first and second offset portions 75 and 77 of a seal unit 67 extend longitudinally to the points of intersection of the endless belt 7 and the associated rail member 11 with the corresponding end pulley. A curved cover plate 79 mounted perpendicular to the planar member 73 covers the groove 29 in the pulley receiving the associated rail member 11 and the peripheral surface of the pulley outboard of the groove, and is provided with a notch 81 through which the associated resilient rail member 11 passes to enter the groove in the pulley. The edge 83 of the cover 79 lies along the intersection of the bottom surface of the associated resilient rail member 11 and the peripheral surface of the end pulley while the edge 85 lies along the sloping side 19 of the rail member and the edge 87 lies along the intersection of the inner surface of the endless belt and the peripheral surface of the end pulley.

An arcuate member 91 secured at right angles to the edge of curved cover plate 79 extends around the end of the end pulley from the flange 69 to about the point of tangency of the endless belt and the end pulley to prevent material from entering from the end of the pulley. A reinforcing plate 93 is secured to the arcuate member 91 at the distal end to strengthen it and a stiffener 95 is welded to the reinforcing plate for added rigidity.

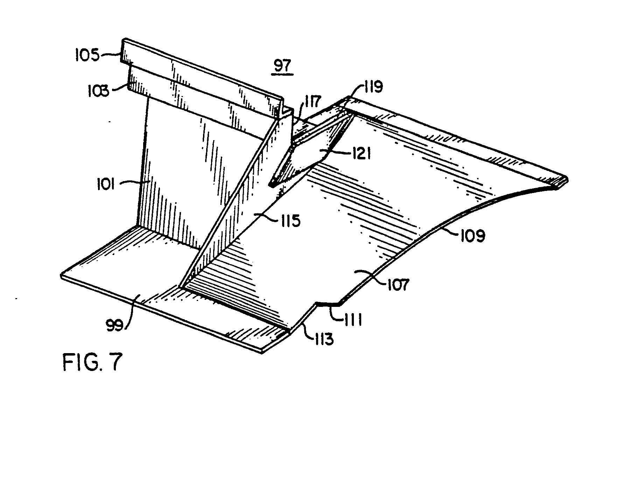

A respective second seal unit 97 is disposed adjacent each I-beam 63 where the endless belt leaves an end pulley. Such a second seal unit 97, which is shown in Figure 7, also includes a flange portion 99 which abuts a flange 71 on one of the frame I-beams 63. Similarly, a planar member 101 recessed from the longitudinal edge of the endless belt 7, extends at right angles from the flange portion 99 toward the associated resilient rail member and terminates in a first offset portion 103 which accommodates the associated resilient rail member 11 and a second offset portion 105 which parallels the inner surface of the endless belt and extends around the longitudinal edge of the belt to form therewith a labyrinth seal.

This second seal unit 97 also serves as a scraper for removing any material that may have got past the seals and lodged in the grooves in the end pulleys, or adhered to the inner surface of the endless belt or the associated resilient rail member. Hence, this seal unit includes a planar member 107 which slopes away from the inner surface of the belt as it extends toward the edge thereof and intersects the flange portion 99 of the seal unit 97. A leading edge of the planar member 107 is contoured to provide a first portion 109 which scrapes the bottom of the adjacent groove 29 in the end pulley, a second portion 111 which scrapes the side of the adjacent groove 29 and a third portion 113 which scrapes the peripheral surface of the end pulley outside the adjacent groove 29. A second planar member 115 abuts the trailing edge of the first planar member 107 and extends transversely of the first planar member toward the inner surface of the belt so that the second planar member slopes away from the inner surface of the belt in the direction of belt movement. The second planar member extends perpendicularly of the plane of the loop of the endless belt 7, intersects the planar member 101 and its first and second offset portions 103 and 105 respectively, and is provided with a notch 117 through which the associated resilient rail member 11 passes. The bottom edge 119 of this notch is provided with a resilient scraper 121 which clean the bottom surface of the resilient rail member.

The seal units 67 and 97 are provided for the end pulley at the digging end of the conveyor. They may also be provided, as shown in Figure 1, at the discharge end, again with seal units 67 being used where the belt approaches the pulley and the units 97 being used where it leaves the pulley.

A seal member 123 extends between a first seal unit 67 disposed adjacent one end pulley and a second seal unit 97 disposed adjacent the other end pulley. As shown in Figure 1, each seal member 123 has a flange 125 which abuts the adjacent flange 71 of the respective I-beam 63 and a planar member which extends outwardly from the flange 125 and has first and second offset portions which accommodate the adjacent resilient rail member and the edge of the endless belt, respectively, to form therewith a labyrinth seal which is a continuation of the labyrinth seals formed by the seal units 69 and 97.

While in the digger illustrated, two wire ropes are coupled to the endless belt, one or any number of such wire ropes, each coupled to the endless belt by a resilient rail member made up of two rows of discrete blocks, can be used as required to neutralize the lateral forces generated by the particular application.

The digger disclosed is light weight and can be advanced with a lateral component into a bulk material pile or storage chamber because the unique arrangement which couples the belt to the wire ropes as the belt passes around the end pulleys overcomes the forces tending to cause the belt to creep along the pulleys. For these reasons, it is particularly suitable as a digger head on the end of the elongate boom of a reclaimer. Longer versions of the digger are also useful as replacements for the conventional chain type bucket ladders in such installations as continuous ship unloaders and drag flight conveyors.

While the invention has been described in detail as applied to a conveyor with buckets, it is also applicable to conveyors having other types of digging elements which would contribute to the development of lateral forces on the endless belt, such as cleats. Such other digging elements could be discrete devices bolted to the belt in a similar manner to the buckets or could be formed integrally with the belt. One such other application of a conveyor in accordance with the invention is to cleated tracks used in a tethered vehicle for moving bulk material.

Since the pulley grooves of a conveyor in accordance with the invention are of slightly narrower width than the resilient rail members, tension in the belt produces a radial component which forces each resilient rail member down into the corresponding pulley groove thereby wedging it into gripping engagement with the associated wire rope. Lateral forces imposed on the belt, such as by moving the conveyor laterally into a pile of bulk material, stretch the wire ropes due to the tendency of the tapered side walls on the resilient rail members to climb out of the pulley grooves. The resulting tension induced in the wire ropes resists the lateral force tending to cause the belt to creep longitudinally along the pulley. Similarly, the digging force which tends to pull the belt radially away from the end pulley is resisted by the tension it induces in the wire ropes. While the radial digging force tends to relieve the wedging action produced by tension in the endless belt, the resiliency of the resilient rail members and the other parameters are such that sufficient gripping force remains to maintain the coupling of the wire ropes to the endless belt as they pass around the end pulley together. It is also possible to bias the wire ropes with a tension force which will wedge the resilient rail members down into the pulley grooves.

Significantly, the wire ropes are only coupled firmly to the conveyor belt at the end pulleys where they are needed to resist radial and lateral forces on the belt. Between the end pulleys, the wire ropes are loosely connected to the endless belt. Thus, in the work runs, essentially the full tension load is carried by the belt, not the wire ropes. This is advantageous because the endless belt and wire ropes, are then free to adjust longitudinally with respect to each other in this area.

A conveyor in accordance with the present invention is useful in any situation where it may be subjected to lateral and/or radial loading and is particularly useful in belt type bucket ladders where the conveyor is advanced in a direction which has a lateral component. It is also particularly useful in the cleated tracks for the tethered vehicle for moving bulk material.

**Claims**

1. A belt conveyor comprising: an endless belt (7); a frame (5) including a pair of spaced pulleys (1, 3) around which the endless belt (7) is trained so as to be movable over the pulleys; a resilient rail member (11) extending along the length of and secured to the inner surface of the endless belt (7); and a wire rope (9) loosely received in and extending through a longitudinal bore of the resilient rail member (11), the rail member (11) having a transverse cross-section which tapers in a direction away from the inner surface of the belt (7) and each pulley (1, 3) having a peripheral groove (29) for receiving the resilient rail member (11), each peripheral groove (29) having a tapered cross-section, corresponding to, but slightly smaller in width than, that of the resilient rail member (11), characterised in that digging means are provided on the outer surface of the endless belt (7) at spaced locations along its length, in that the wire rope (9) is fully enclosed within the longitudinal bore of the resilient rail member (11) throughout its length, and in that the wire rope (9) is only gripped firmly by the resilient rail member (11) when the rail member is wedged down into the pulley groove (29) upon the rail member (11) passing over a pulley (1, 3).

2. A conveyor according to Claim 1, characterised in that a plurality of resilient rail members (11) extend along the length of and are secured to the inner surface of the endless belt (7), a respective wire rope (9) being loosely received in and extending through a corresponding longitudinal bore of each resilient rail member (11); each resilient rail member (11) having a transverse cross-section which tapers in a direction away from the inner surface of the belt (7) and each end pulley (1, 3) having a plurality of peripheral grooves (29), each groove (29) having a cross-section corresponding to, but slightly narrower than, that of the corresponding resilient rail member (11) such that as a resilient rail member (11) passes over a pulley (1, 3), the resilient rail member (11) is wedged down into the respective pulley groove (29) to grip the wire rope extending through the resilient member (11).

3. A conveyor according to Claim 1 or Claim 2, characterised in that each resilient rail member (11) comprises two longitudinal portions having elongate grooves (17), in the confronting faces thereof, the elongate grooves (17) defining the longitudinal bore of the resilient rail member (11).

4. A conveyor according to Claim 3, characterised in that each of the longitudinal portions of the or each resilient rail member (11) comprises a series of discrete blocks (13).

5. A conveyor according to Claim 4, characterised in that adjacent ones of discrete blocks (13) in each series thereof have meshing projections (21) and recesses (23).

6. A conveyor according to Claim 4 or Claim 5, characterised in that the digging means comprises discrete digging members spaced along the belt and in that the discrete blocks (13) and discrete digging members are secured to the inner and outer surfaces respectively of the endless belt (7) by elongate fasteners (25) passing through the discrete blocks (13), the belt (7) and said discrete digging members.

7. A conveyor according to Claim 6, characterised in that the discrete digging members are cleats or buckets (33).

8. A conveyor according to Claim 6, characterised in that the discrete digging members are buckets (33) which are secured to the outer surface of the endless belt (7) at the leading and trailing ends thereof at longitudinally spaced points along the belt (7) and means are provided for accommodating for the change in the straight line distance between the spaced points as the endless belt (7) and buckets (33) pass around the pulleys (1, 3).

9. A conveyor according to Claim 8, characterised in that the accommodating means includes first mounting means at one of the longitudinally spaced points which allows the one end of the bucket (33) mounted thereby to reciprocate relative to the point in the plane of the endless belt (7).

10. A conveyor according to Claim 9, characterised in that the first mounting means connects the one end of the bucket (33) to the endless belt (7) and includes a linkage pivotally connected to the bucket (33) and to a fixed pivot on the endless belt (7) at one of the spaced points for rotation in the plane of the endless belt (7) and wherein the other end of the bucket (33) is pivotally connected to the belt (7) at the other spaced point by a fixed pivot of second mounting means.

11. A conveyor according to any one of Claims 8 to 10, characterised in that the bottom wall of each bucket (33) is formed by the endless belt (7).

12. A conveyor according to Claim 11, characterised in that side walls (35) of the buckets (33) extending along the endless belt (7) have bottom edges (61) facing the belt (7) which are concavely curved to accommodate the curvature of the peripheral surface of the pulleys (1, 3).

13. A conveyor according to any preceding claim, characterised in that the frame (5) includes a respective elongate longitudinal member (63) extending along each side of the conveyor outside the endless belt (7) and overlapping the end pulleys (1, 3) which are journalled for rotation at opposite ends of the elongate longitudinal members (63), and seal means are provided for sealing spaces between the elongate longitudinal members (63), the edges of the belt (7) and the end pulleys (1, 3), which seal means include, for one or each end pulley (1, 3), means overlapping the end faces of the pulley (1, 3) between the elongate longitudinal members (63) and the edges of the portion of the belt (7) which is adjacent the pulley (1, 3) and a scraper or a respective scraper (97) extending into the or each groove (29) in the pulley (1, 3) at the part where the or the corresponding resilient rail member (11) leaves the or the respective groove (29) for scraping deposits from the or the respective groove (29) and diverting them laterally out of the plane of the endless belt (7).

14. A conveyor according to Claim 13, characterised in that the or each scraper (97) comprises a first planar member (107) which slopes away from the inner surface of the belt (7) as the first planar member (107) extends toward the respective edge of the belt (7), the first planar member (107) having a leading edge contoured to scrape the or a pulley groove (29) and the surface of the pulley (1, 3) between that respective groove (29) and the end face of the pulley (1, 3) adjacent the respective edge of the belt (7) and a second planar member (115) abutting a trailing edge of the first planar member (107), the second planar member (115) extending transversely of the first planar member (107) toward the inner surface of the belt (7) and sloping away from the inner surface of the belt (7) in the direction in which the belt (7) is movable and the second planar member (115) having a notch (117) in the edge thereof which is directed towards the inner surface of the belt (7), which notch (117) is contoured to scrape the surface of the or a resilient rail member (11).

15. A conveyor according to Claim 14, characterised in the space filling means of the seal means comprises one or more seal portions (123), the or each seal portion (123) being recessed from the side edges of the endless belt (7) and extending around the or a respective resilient rail member (11) and the inner surface and an or a respective edge of the endless belt (7) to form a labyrinth seal to prevent material and foreign matter getting under the belt (7) and the resilient rail member or members (11).

16. A conveyor according to Claim 15, characterised in that the seal means includes a curved plate member abutting an end of the or each seal portion (123) where the latter approaches the said one end pulley or the respective end pulley (1, 3), the or each curved plate member extending laterally outwardly to the end face of the said one or the respective end pulley (1, 3) and circumferentially around the pulley (1, 3) in close proximity thereto to cover the or a groove (29) therein in front of the position at which the endless belt (7) engages the pulley and wherein the overlapping means extend from the or each curved plate member around the end faces of the said one or the respective end pulley (1, 3).

**Patentansprüche**

1. Gurtförderer aufweisend: einen endlosen Gurt (7); einen Rahmen (5) einschließlich eines Paares von beabstandeten Gurttrommeln (1, 3), um welche der endlose Gurt (7) so geschlungen ist, daß er über die Gurttrommeln bewegbar ist; ein nachgiebiges Schienenelement (11), welches sich entlang der Länge der inneren Oberfläche des endlosen Gurtes (7) erstreckt und an dieser gesichert ist; und ein Drahtseil (9), das lose in einer Längsbohrung des nachgiebigen Schienenelementes (11) aufgenommen ist und sich durch diese erstreckt, wobei das Schienenelement (11) einen Querschnitt in Querrichtung aufweist, der sich in einer entgegengesetzten Richtung zu der inneren Oberfläche des Gurtes (7) verjüngt und jede Gurttrommel (1, 3) eine Umfangsausnehmung (29) besitzt, um das nachgiebige Schienenelement (11) aufzunehmen, wobei jede Umfangsausnehmung (29) einen verjüngten Querschnitt besitzt, der dem des nachgiebigen Schienenelementes entspricht aber geringfügig kleiner in der Weite ist, dadurch gekennzeichnet, daß Schaufelelemente vorgesehen sind an der äußeren Oberfläche des endlosen Gurtes (7), an beabstandeten Orten entlang dessen Länge, daß das Drahtseil (9) vollständig eingeschlossen ist in der Längsbohrung des nachgiebigen Schienenelementes (11) über seine Länge und daß das Drahtseil (9) lediglich fest erfaßt ist durch das nachgiebige Schienenelement (11) wenn das Schienenelement abgeknickt ist oder eingeklemmt ist in die Gurttrommelausnehmung (29), wenn das Schienenelement (11) über eine Gurttrommel (1, 3) sich bewegt.

2. Gurtförderer nach Anspruch 1, dadurch gekennzeichnet, daß eine Mehrzahl von nachgiebigen Schienenelementen (11) sich entlang der Länge der inneren Oberfläche des endlosen Gurtes (7) erstrecken und an dieser gesichert sind, wobei ein jeweiliges Drahtseil (9) lose in einer entsprechenden Längsbohrung jedes nachgiebigen Schienenelementes (11) aufgenommen ist und sich durch diese erstreckt, wobei weiter jedes nachgiebige Schienenelement (11) einen Querschnitt in Querrichtung besitzt, der sich in einer Richtung von der inneren Oberfläche des Gurtes (6) weg gerichtet verjüngt und jede Gurttrommel (1, 3) eine Mehrzahl von Umfangsausnehmungen (29) besitzt, wobei jede Ausnehmung (29) einen Querschnitt besitzt, der denjenigen des entsprechenden nachgiebigen Schienenelementes (11) entspricht, jedoch ein wenig enger ist, so, daß ein nachgiebiges Schienenelement (11), welches sich über eine Gurttrommel (1, 3) bewegt, in die jeweilige Gurttrommelausnehmung (29) eingeklemmt wird, um das Drahtseil zu erfassen, welches sich durch das nachgiebige Element (11) erstreckt.

3. Gurtförderer nach Anspruch 1 oder 2, dadurch gekennzeichnet, daß jedes nachgiebige Schienenelement (11) zwei Längsbereiche aufweisen, welche langgestreckte Ausnehmungen (17) besitzen, in ihren einander zugewandten Seiten, und daß die langgestreckten Ausnehmungen (17) die Längsbohrung des nachgiebigen Schienenelementes (11) bilden.

4. Gurtförderer nach Anspruch 3, dadurch gekennzeichnet, daß jeder der Längsbereiche des oder jedes nachgiebigen Schienenelementes (11) eine Serie von einzelnen Blocks aufweist.

5. Gurtförderer nach Anspruch 4, dadurch gekennzeichnet, daß solche einzelnen Blocks, die aneinander grenzen, in jeder Serie miteinander in Eingriff stehende Vorsprünge und Ausnehmungen besitzen.

6. Gurtförderer nach Anspruch 4 oder 5, dadurch gekennzeichnet, daß die Schaufelelemente einzelne Schaufelemente aufweisen, die entlang den Gurt beabstandet sind und daß die einzelnen Blöcke (13) und die einzelnen Schaufelemente an den inneren und äußeren Flächen des endlosen Gurtes (7) jeweils gesichert sind, durch langgestreckte Befestigungsmittel (25), die sich durch die einzelnen Blocks (13), den Gurt (7) und die einzelnen Schaufelelemente erstrecken.

7. Gurtförderer nach Anspruch 6, dadurch gekennzeichnet, daß die einzelnen Schaufelelemente Halteleisten oder Becher (33) sind.

8. Gurtförderer nach Anspruch 6, dadurch gekennzeichnet, daß die einzelnen Schaufelemente Becher (33) sind, die an der äußeren Oberfläche des endlosen Gurtes (7) befestigt sind, an vorderen und hinteren Enden desselben, an längs beabstandeten Punkten entlang dem Gurt (7), und daß Mittel vorgesehen sind, um eine Änderung in dem direkten Längenabstand zwischen den beabstandeten Punkten auszugleichen, wenn der endlose Gurt (7) und die Becher (33) um die Gurttrommeln (1, 3) herumlaufen.

9. Gurtförderer nach Anspruch 8, dadurch gekennzeichnet, daß die Ausgleichselemente erste Befestigungsmittel an einem der in Längsrichtung beabstandeten Punkte aufweisen, was ermöglicht, daß dadurch das eine Ende des Bechers (33) befestigt ist, um damit relativ zu dem Punkt in der Ebene des endlosen Gurtes (7) auszugleichen.

10. Gurtförderer nach Anspruch 9, dadurch gekennzeichnet, daß die Befestigungselemente das eine Ende des Bechers (33) mit dem Endlosgurt (7) verbinden und eine Verbindung einschließen, die drehbar mit dem Becher (33) verbunden ist und mit einer festen Drehachse an dem Endlosgurt (7), an einem der beabstandeten Punkte für eine Drehung in der Ebene der Endlosgurtes (7), une wobei das andere Ende des Bechers (33) drehbar mit dem Gurt (7) an dem anderen beabstandeten Punkt über eine feste Drehachse von zweiten Befestigungselementen befestigt ist.

11. Gurtförderer nach einem der Ansprüche 8 bis 10, dadurch gekennzeichnet, daß die Bodenwand jedes Bechers (33) durch den Endlosgurt (7) gebildet ist.

12. Gurtförderer nach Anspruch 11, dadurch gekennzeichnet, daß die Seitenwände (35) der Becher (33), die sich entlang dem Endlosgurt (7) erstrecken, Bodenecken (61) besitzen, die dem Gurt (7) zugewandt sind, und die konkav geformt sind, um sich an die äußere Oberfläche der Gurttrommeln (1, 3) anzupassen.

13. Gurtförderer nach einem der vorstehenden Ansprüche, dadurch gekennzeichnet, daß der Rahmen (5) ein jeweiliges langgestrecktes Element (63) aufweist, welches sich entlang jeder Seite des Förderes außerhalb des Endlosgurtes (7) erstreckt und die Endtrommeln (1, 3) überragt, die an entgegengesetzten Enden der langgestreckten Längselemente (63) zur Drehung gelagert sind, und daß Dichtelemente vorgesehen sind zur Abdichtung der Zwischenräume zwischen den langgestreckten Elementen (63), den Ecken des Gurtes (7) und den Endtrommeln (1, 3), welche Dichtelemente aufweisen, für eine oder jede Endtrommel (1, 3), Elemente, die die Endflächen der Gurttrommel (1, 3) zwischen den langgestreckten Längselementen (63) und den Ecken des Bereiches des Gurtes (7), welcher an die Gurttrommel (1, 3) angrenzt, überragen, und wobei ein Abstreifer oder ein jeweiliger Abstreifer (97) sich in die oder jede Ausnehmung (29) in der Gurttrommel (1, 3) erstreckt, an dem Teil, wo die oder das entsprechende nachgiebige Schienenelement (11) die oder die jeweilige Ausnehmung (29) verläßt, um Ablagerungen aus der oder der jeweiligen Ausnehmung (29) abzustreifen und nach seitlich außerhalb der Ebene des Endlosgurtes (7) zu leiten.

14. Gurtförderer nach Anspruch 13, dadurch gekennzeichnet, daß der oder jeder Abstreifer (97) ein erstes planares Element (107) aufweist, das abgeschrägt ist von der inneren Fläche des Gurtes (7) wegweisend, da sich das erste planare Element (107) zu der jeweiligen Ecke des Gurtes (7) erstreckt, wobei das erste planare Element (107) eine vordere Ecke besitzt, die so ausgestaltet ist, daß die oder eine Trommelausnehmung (29) und die Oberfläche der Trommel (1, 3) abstreift, welche sich zwischen der jeweiligen Ausnehmung (29) und der Endfläche der Gurttrommel (1, 3) befindet, angrenzend an die jeweilige Ecke des Gurtes (7) und ein zweites planares Element (115), welches an eine führende Ecke des ersten planaren Elementes (107) stößt, wobei das zweite planare Element (115) sich quer zu dem ersten planaren Element (107) zu der inneren Fläche des Gurtes (7) hin erstreckt und von der inneren Oberfläche des Gurtes (7) in die Richtung, in welche der Gurt (7) bewegbar ist, abfällt, und das zweite planare Element (115) einen Nocken (117) besitzt, in seiner Ecke, welche zu der inneren Fläche des Gurtes (7) gerichtet ist, welche Nocke (117) so geformt ist, daß die Fläche des oder eines nachgiebigen Schienenelementes (11) abgestreift wird.

15. Gurtförderer nach Anspruch 14, dadurch gekennzeichnet, daß die Raumfüllungselemente der Dichtungselemente einen oder mehrere Dichtungsbereiche (123) aufweisen, wobei der oder jeder Dichtbereich (123) ausgespart ist von den Seitenecken des Endlosgurtes (7) und sich um das oder ein jeweiliges nachgiebiges Schienenelement (11) und die innere Fläche und eine oder eine jeweilige Ecke des Endlosgurtes (7) erstreckt, zur Bildung einer Labyrinthdichtung, um zu verhindern, daß Förderstoff und Fremdstoffe unter der Gurt (7) und das nachgiebige Schienenelement oder die Elemente (11) gelangen.

16. Gurtförderer nach Anspruch 15, dadurch gekennzeichnet, daß die Dichtmittel ein gekrümmtes Plattenelement aufweisen, das an ein Ende des oder jedes Dichtbereiches (123) anstößt, wo letzterer die eine Endtrommel oder die jeweilige Endtrommel (1, 3) erreicht, wobei weiter das oder jedes gekrümmte Plattenelement sich seitlich nach außen zu der Endfläche der einen oder der jeweiligen Endtrommel (1, 3) erstreckt, und am Umfang um die Trommel (1, 3), in unmittelbarer Nachbarschaft zu dieser, um die oder eine Ausnehmung (29) darin abzudecken, vorne bezüglich der Stellung, an welcher der Endlosgurt (7) die Gurttrommel erfasst und wobei sich Übergreifelemente von dem oder jedem gekrümmten Plattenelement um die Endflächen des oder der jeweiligen Endflächen (1, 3) erstrecken.

**Revendications**

1. Transporteur à bande comportant: une bande sans fin (7), un bâti (5) comprenant une paire de tambours espacés (1, 3) autour desquels la bande sans fin (7) est guidée de façon à se déplacer sur les tambours; un élément élastique formant rail (11) s'étendant sur la longueur de la surface intérieure de la bande sans fin (7) et fixé à cette surface intérieure, et un câble métallique (9) logé, sans serrage, dans un alésage longitudinal de l'élément élastique formant rail (11) et s'étendant à travers cet alésage, l'élément formant rail (11) présentant une section droite transversale en pointe dans la direction qui s'éloigne de la surface intérieure de la bande (7) et chaque tambour (1, 3) présentant une rainure périphérique (29) pour recevoir l'élément élastique formant rail (11), chaque rainure périphérique (29) présentant une section droite en pointe correspondant à celle de l'élément élastique formant rail (11), mais de largeur légèrement plus faible, caractérisé en ce que des moyens de creusement sont prévus sur la surface extérieure de la bande sans fin (7) en des endroits espacés sur la longueur de celle-ci, en ce que le câble métallique (9) est complètement enfermé à l'intérieur de l'alésage longitudinal de l'élément élastique formant rail (11) sur toute sa longueur, et en ce que le câble métallique (9) n'est serré fermement par l'élément élastique formant rail (11) que lorsque l'élément formant rail s'enfonce et se coince dans la rainure (29) d'un tambour lorsque l'élément formant rail (11) passe sur un tambour (1, 3).

2. Transporteur selon la revendication 1, dans lequel plusieurs éléments élastiques formant rail (11) s'étendent sur la longueur de la surface intérieure de la bande sans fin (7) et sont fixés à cette surface intérieure, un câble métallique (9) respectif étant logé, sans serrage, dans un alésage longitudinal correspondant de chaque élément élastique formant rail (11) et s'étendant dans cet alésage, chaque élément élastique formant rail (11) présentant une section droite transversale en pointe dans une direction qui s'éloigne de la surface intérieure de la bande (7) et chaque tambour d'extrémité (1, 3) présentant plusieurs rainures périphériques (29), chaque rainure (29) présentant une section droite correspondant à celle de l'élément élastique formant rail (11) correspondant, mais légèrement plus étroite, de façon que lorsqu'un élément élastique formant rail (11) passe sur un tambour (1, 3), l'élément élastique formant rail (11) s'enfonce et se coince dans la rainure respective (29) du tambour pour serrer le câble métallique qui s'étend à travers l'élément élastique (11).

3. Transporteur selon la revendication 1 ou 2, caractérisé en ce que chaque élément élastique formant rail (11) comporte deux parties longitudinales présentant des rainures allongées (17) sur leurs faces orientées l'une vers l'autre, les rainures allongées (17) définissant l'alésage longitudinal de l'élément élastique formant rail (11).

4. Transporteur selon la revendication 3, caractérisé en ce que chacune des parties longitudinales de l'élément élastique formant rail (11), ou de chaque élément élastique formant rail (11), comprend une série de blocs distincts (13).

5. Transporteur selon la revendication 4, caractérisé en ce que des blocs distincts (13) adjacents de chaque série présentent des saillies (21) et des évidements (23) qui s'engrènent les unes dans les autres.

6. Transporteur selon la revendication 4 ou la revendication 5, caractérisé en ce que les moyens de creusement comprennent des éléments de creusement distincts espacés le long de la bande et en ce que les blocs distincts (13) et les éléments de creusement distincts sont fixés respectivement à la surface intérieure et à la surface extérieure de la bande sans fin (7) au moyen d'attaches allongées (25) qui passent à travers les blocs distincts (13), la bande (7) et les éléments excavateurs distincts.

7. Transporteur selon la revendication 6, caractérisé en ce que les éléments de creusement distincts sont des tasseaux ou des godets (33).

8. Transporteur selon la revendication 6, caractérisé en ce que les éléments de creusement distincts sont des godets (33) fixés à la surface extérieure de la bande sans fin (7), à leur extrémité avant et à leur extrémité arrière, en des points longitudinalement espacés le long de la bande (7), et en ce que des moyens sont prévus pour s'adapter au changement de la distance en ligne droite entre les points espacés lorsque la bande sans fin (7) et les godets (33) passent autour des tambours (1, 3).

9. Transporteur selon la revendication 8, caractérisé en ce que les moyens d'adaptation comprennent des premiers moyens de montage situés en l'un des points espacés longitudinalement, permettant à celle des extrémités du godet (33) qui est montée par l'intermédiaire de ces moyens d'avoir un mouvement de va-et-vient par rapport à ce point dans le plan de la bande sans fin (7).

10. Transporteur selon la revendication 9, caractérisé en ce que les premiers moyens de montage relient cette même extrémité du godet (33) à la bande sans fin (7) et comprennent une bielle reliée de manière pivotante au godet (33) et à un pivot fixe de la bande sans fin (7) situé à l'un des points espacés, pour pouvoir tourner dans le plan de la bande sans fin (7), et dans lequel l'autre extrémité du godet (33) est reliée de manière pivotante à la bande (7) à l'autre point espacé, par un pivot fixe de seconds moyens de montage.

11. Transporteur selon l'une quelconque des revendications 8 à 10, caractérisé en ce que la paroi du fond de chaque godet (33) est formée par la bande sans fin (7).

12. Transporteur selon la revendication 11, caractérisé en ce que les parois latérales (35) des godets (33) s'étendant le long de la bande sans fin (7) ont des bords inférieurs (61), faisant face à la bande (7), qui sont courbes et concaves pour s'adapter à la courbure de la surface périphérique des tambours (1, 3).

13. Transporteur selon l'une quelconque des revendications précédentes, caractérisé en ce que le bâti (5) comporte un élément longitudinal allongé respectif (63) s'étendant le long de chaque côté du transporteur, à l'extérieur de la bande sans fin (7), et recouvrant les tambours d'extrémité (1, 3) qui sont montés sur paliers pour pouvoir tourner aux extrémités opposées des éléments longitudinaux allongés (63), et en ce que des moyens de protection sont prévus pour rendre hermétiques des espaces situés entre les éléments longitudinaux allongés (63), les bords de la bande (7) et les tambours d'extrémité (1, 3), ces moyens de protection comportant, pour l'un, ou pour chacun, des tambours d'extrémité (1, 3), des moyens recouvrant les faces d'extrémité du tambour (1, 3) entre les éléments longitudinaux allongés (63) et les bords de la partie de la bande (7) voisine du tambour (1, 3), ainsi qu'un racleur, ou un racleur respectif, (97), pénétrant dans la rainure, ou dans chaque rainure, (29) du tambour (1, 3) à l'endroit où l'élément élastique formant rail (11), ou l'élément élastique formant rail (11) correspondant, quitte la rainure, ou la rainure respective, (29) pour racler des dépôts de la rainure, ou de la rainure respective, (29) et les rejeter latéralement en dehors du plan de la bande sans fin (7).

14. Transporteur selon la revendication 13, caractérisé en ce que le racleur, ou chaque racleur, (97) comprend un premier élément plan (107) qui va en s'inclinant en s'éloignant de la surface intérieure de la bande (7) au fur et à mesure que le premier élément plan (107) s'étend vers le bord respectif de la bande (7), le premier élément plan (107) présentant un bord avant profilé pour racler la, ou une, rainure (29) et la surface du tambour (1, 3) située entre cette rainure respective (29) et la face d'extrémité du tambour (1, 3) voisine du bord respectif de la bande (7), et un second élément plan (115) qui vient en butée contre un bord arrière du premier élément plan (107), le second élément plan (115) s'étendant transversalement par rapport au premier élément plan (107), en direction de la surface intérieure de la bande (7) et allant en s'inclinant en s'éloignant de la surface intérieure de la bande (7) dans la direction selon laquelle la bande (7) peut se déplacer, et le second élément plan (115) présentant une encoche (117) dans son bord dirigé vers la surface intérieure de la bande (7), encoche (117) qui est profilée pour racler la surface de l'élément, ou d'un élément, élastique formant rail (11).

15. Transporteur selon la revendication 14, caractérisé en ce que ceux des moyens de protection qui remplissent l'espace comportent une un plusieurs partie(s) de protection (123), la ou chaque partie de protection (123) étant en retrait par rapport aux bords latéraux de la bande sans fin (7) et s'etendant autour de l'élément élastique, ou d'un élément élastique respectif, formant rail (11), autour de la surface intérieure et autour d'un bord ou d'un bord respectif de la bande sans fin (7), pour former un joint labrinthe pour empêcher que du matériau et des corps étrangers ne passent sous la bande (7) et sous l'élément, ou les éléments, élastique(s) formant rail(s) (1).

16. Transporteur selon la revendication 15, caractérisé en ce que les moyens de protection comprennent un élément à tôle cintrée qui vient en butée contre une extrémité de la, ou de chaque, partie de protection (123), à l'endroit où cette dernière s'approche dudit tambour d'extrémité, ou du tambour d'extrémité respectif, (1, 3), l'élément, ou chaque élément, à tôle cintrée s'étendant latéralement vers l'extérieur jusqu'à la face d'extrémité dudit tambour d'extrémité, ou du tambour d'extrémité respectif, (1, 3), et s'étendant circonférentiellement autour du tambour (1, 3), en son voisinage immédiat, pour recouvrir la, ou une, rainure (29) du tambour, en avant de l'endroit où la bande sans fin vient au contact du tambour, les moyens de recouvrement s'étendant, depuis l'élément, ou chaque élément, à tôle cintrée autour des faces d'extrémité dudit tambour, ou du tambour respectif, d'extrémité (1, 3).

FIG. 1

FIG. 2

0 131 377

FIG. 3

FIG. 4

FIG. 5

FIG. 6

FIG. 7